(19) **Europäisches Patentamt**
**European Patent Office**
**Office européen des brevets**

(11) **EP 3 423 346 B1**

(12) **FASCICULE DE BREVET EUROPEEN**

(45) Date de publication et mention de la délivrance du brevet:
**16.11.2022 Bulletin 2022/46**

(21) Numéro de dépôt: **17703391.7**

(22) Date de dépôt: **02.02.2017**

(51) Classification Internationale des Brevets (IPC):
**B63B 35/44** (2006.01)  **F16F 15/023** (2006.01)
**F16F 7/10** (2006.01)  **F03D 13/25** (2016.01)

(52) Classification Coopérative des Brevets (CPC):
**B63B 35/44; F03D 13/25;** B63B 2035/446;
F05B 2240/93; F05B 2240/95; F16F 7/1034;
F16F 15/023; Y02E 10/72; Y02E 10/727

(86) Numéro de dépôt international:
**PCT/EP2017/052295**

(87) Numéro de publication internationale:
**WO 2017/148648 (08.09.2017 Gazette 2017/36)**

(54) **SYSTEME DE STABILISATION, EN PARTICULIER POUR UN SUPPORT FLOTTANT, AVEC PLUSIEURS DISPOSITIFS D'AMORTISSEMENT AYANT UNE FORME DE U**

STABILISIERUNGSSYSTEM, INSBESONDERE FÜR EINEM SCHWIMMENDEN TRÄGER, MIT MEHREREN U-FÖRMIGEN DÄMPFUNGSVORRICHTUNGEN

STABILISATION SYSTEM, IN PARTICULAR FOR A FLOATING SUPPORT, COMPRISING MULTIPLE U-SHAPED DAMPING DEVICES

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **02.03.2016 FR 1651745**

(43) Date de publication de la demande:
**09.01.2019 Bulletin 2019/02**

(73) Titulaire: **IFP Energies nouvelles**
**92500 Rueil-Malmaison (FR)**

(72) Inventeurs:
• **LEPREUX, Olivier**
**69007 Lyon (FR)**
• **COUDURIER, Christophe**
**69007 Lyon (FR)**

(74) Mandataire: **IFP Energies nouvelles**
**Département Propriété Industrielle**
**Rond Point de l'échangeur de Solaize**
**BP3**
**69360 Solaize (FR)**

(56) Documents cités:
EP-A2- 1 677 003       WO-A1-2006/062390
WO-A1-2009/043547   JP-A- 2004 291 702
KR-A- 20110 101 508   NL-A- 280 007
US-A1- 2014 339 828

EP 3 423 346 B1

**Description**

La présente invention concerne le domaine des supports flottants en mer (« offshore flottant ») en particulier pour les éoliennes offshore, le domaine des supports posés en mer en particulier pour les éoliennes offshore posées, et le domaine du génie civil, notamment pour des gratte-ciels ou des ponts.

Dans le cas des éoliennes offshore, le support flottant supporte, en partie émergée, l'éolienne composée des pales, du rotor, de la nacelle et du mat fixé sur le support flottant. Ces supports flottants peuvent être ancrés au sol marin par des lignes d'ancrage tendues, semi-tendues ou des lignes d'ancrage caténaires. Le support flottant a pour but d'apporter la flottabilité et la stabilité de l'éolienne, de manière à reprendre les efforts exercés sur celle-ci, tout en limitant les mouvements de l'ensemble.

Divers supports flottants dédiés à l'installation d'éoliennes de plusieurs mégawatts au large des côtes sont en cours de développement dans de nombreux pays. Selon la profondeur du site considéré, plusieurs options de conception sont envisageables. Malgré leur grande diversité, plusieurs familles de support flottant se dégagent. On peut citer :

-    les flotteurs de type SPAR, caractérisés par une forme géométrique élancée, et comportant un ballast important afin d'abaisser au maximum le centre de gravité de l'ensemble de la structure, et ainsi d'assurer la stabilité,
-    les flotteurs de type barge : ce sont des supports à faible tirant d'eau et très large. Leur stabilité est assurée par leur large surface de flottaison. Cependant, ce type de support est très sensible à la houle,
-    les supports de type TLP (de l'anglais « Tension Leg Platform » qui peut être traduit par plateforme à lignes tendues), qui ont la particularité d'être amarrés au fond de la mer par des lignes tendues garantissant la stabilité de la structure, et
-    les flotteurs de type semi-submersible : ce sont des supports constitués d'au moins trois flotteurs reliés par des bras afin d'en assurer la rigidité. Ces supports ont en général un faible déplacement, et présentent une inertie de la surface de flottaison importante, leur procurant ainsi un couple de redressement suffisant à leur stabilité. De plus, ce type de flotteur est moins sensible à la houle que les barges.

Les supports flottants peuvent également être utilisés dans d'autres domaines que l'installation d'éolienne offshore (en mer), par exemple pour des moyens de production d'hydrocarbures, des systèmes houlomoteurs (convertisseur d'énergie de la houle en énergie mécanique ou électrique)....

Afin de permettre l'amortissement du mouvement causé par les vagues, différentes solutions d'amortissement ont été envisagées pour ces flotteurs.

Selon une première solution, l'amortissement peut être réalisé par un système de ballastage avec un « tube en U » comprenant un liquide pouvant se déplacer entre les deux branches verticales du U. Cette solution est décrite notamment dans le document :
C. Coudurier, O. Lepreux, and N. Petit, Passive and semi-active control of an offshore floating wind turbine using a tuned liquid column damper, in Proc. of 10th IFAC Conférence on Manoeuvring and Control of Marine Craft, MCMC, 2015.

On connait également la demande de brevet WO 2006/062390 A1 qui concernent des tubes en U pour une éolienne et les demandes de brevet US 2014/339828 A1 et NL 280 007 qui concernent des tubes en U pour les supports flottants.

Toutefois, cette solution permet uniquement d'amortir les mouvements causés par la houle selon une unique direction. En effet, pour des vagues dont la direction n'est pas parallèle au « tube en U », le mouvement n'est pas amorti. Or, en mer, la direction de la houle est variable dans le temps, par conséquent la houle n'est pas constamment parallèle au « tube en U ».

En outre, le problème de stabilité se pose également dans d'autres domaines, par exemple pour les structures posées en mer (notamment pour les éoliennes posées) qui sont soumises aux sollicitations causées la houle, mais aussi pour le domaine du génie civil (immeubles, ponts) qui peuvent être soumis à des sollicitations causées par le vent ou par un séisme...

Ainsi, la présente invention concerne un support flottant comprenant au moins un flotteur et un système de stabilisation d'un système soumis à des sollicitations extérieures, le système de stabilisation comportant au moins trois dispositifs d'amortissement, sous la forme de tube en U, comprenant des réserves de liquide et un tube de liaison. Au moins deux des dispositifs d'amortissement ne sont pas parallèles l'un par rapport à l'autre. Ainsi, il est possible d'amortir des excitations de la houle, quelle que soit la direction de la houle.

**Le système selon l'invention**

L'invention concerne un support flottant comprenant au moins un flotteur et un système de stabilisation, pour un support flottant, comprenant une pluralité de dispositifs d'amortissement, chaque dispositif d'amortissement ayant sensiblement une forme de U et comportant deux réserves de liquide et un tube de liaison reliant lesdites deux réserves de liquide. Ledit système de stabilisation comporte au moins trois dispositifs d'amortissement, chaque dispositif d'amortissement n'étant pas parallèle à au moins un autre dispositif d'amortissement.

Selon l'invention, lesdits dispositifs d'amortissement sont agencés de sorte à former un polygone, de préférence un polygone régulier, les sommets dudit polygone étant formés par lesdites réserves de liquide desdits dispositifs d'amortissement, et les arrêtes dudit polygone étant formées par lesdits tubes de liaison desdits dispositifs d'amortissement.

De plus, lesdits sommets dudit polygone sont formés par au moins deux réserves de liquide de deux dispositifs d'amortissement distincts.

Conformément à une variante de réalisation le centre de ladite étoile est formé par un croisement d'au moins deux tubes de liaison de deux dispositifs d'amortissement distincts, ou par au moins deux réserves de liquide de deux dispositifs d'amortissement distincts (1).

Selon une mise en œuvre, un tube de liaison d'au moins un dispositif d'amortissement comporte des moyens de restriction du passage dudit liquide.

Conformément à une caractéristique, lesdites réserves de liquide d'au moins un dispositif d'amortissement comportent un gaz dans leurs parties supérieures.

De préférence, au moins un dispositif d'amortissement comporte une conduite pour le passage dudit gaz reliant lesdites deux réserves de liquide.

De manière avantageuse, ladite conduite pour le passage dudit gaz est parallèle audit tube de liaison.

Conformément à une variante, ladite conduite pour le passage dudit gaz comporte des moyens de restriction du passage dudit gaz.

Selon une conception, au moins une réserve de liquide comporte une connexion avec un gaz du milieu extérieur.

Conformément à une mise en œuvre, lesdites réserves de liquide ont une forme sensiblement cylindrique.

Selon un mode de réalisation de l'invention, ledit système de stabilisation comporte entre trois et huit dispositifs d'amortissement.

Avantageusement, ledit support flottant comporte au moins trois flotteurs, chaque flotteur comprenant au moins une réserve de liquide d'un dispositif d'amortissement.

Selon un mode de réalisation, chaque flotteur comporte au moins deux réserves de liquide de deux dispositifs d'amortissement (1) distincts.

En outre, l'invention concerne un système de production d'énergie en mer comprenant au moins une éolienne et un support flottant selon l'une des caractéristiques précédentes.

**Présentation succincte des figures**

D'autres caractéristiques et avantages du système selon l'invention, apparaîtront à la lecture de la description ci-après d'exemples non limitatifs de réalisations, en se référant aux figures annexées et décrites ci-après.

La figure 1 illustre un dispositif d'amortissement selon un mode de réalisation de l'invention.
Les figures 2a à 2e illustrent différents modes de réalisation d'un système de stabilisation selon l'invention.
Les figures 3a à 3d illustrent différentes variantes de réalisation du mode de réalisation de la figure 2a.
La figure 4 est une courbe représentant l'amplitude de déplacement d'un flotteur pour un système selon l'art antérieur, et pour un flotteur selon l'invention, pour différents angles d'incidence de la houle.
Les figures 5a et 5b illustrent l'orientation de la houle pour l'exemple de la figure 4.

**Description détaillée de l'invention**

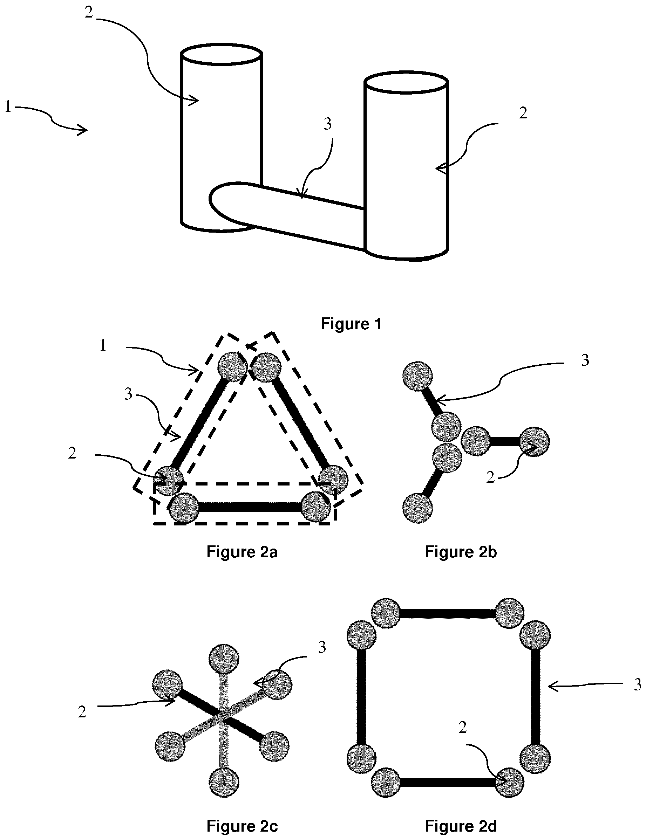

La présente invention concerne un support flottant comprenant au moins un flotteur et un système de stabilisation pour un système pouvant être soumis à des sollicitations extérieures. Le système de stabilisation comporte une pluralité de dispositifs d'amortissement. Chaque système d'amortissement est formé d'un « tube en U », et permet ainsi l'amortissement de l'excitation de la houle selon une direction. Chaque système d'amortissement comporte deux réserves de liquide, agencées dans les branches verticales du « U », et un tube de liaison reliant les deux réserves de liquides, et étant agencé au niveau de la base du U. De préférence, le tube de liaison est sensiblement horizontal. Ainsi, au sein d'un dispositif d'amortissement, le liquide peut se déplacer librement et de manière dynamique (c'est-à-dire sans être commandé, et sans apport d'énergie extérieure) d'une première réserve vers la seconde réserve du dispositif d'amortissement. Le « tube en U » peut être considéré comme sensiblement bidimensionnel, c'est-à-dire compris dans un plan formé par les axes des réserves de liquide et par l'axe du tube de liaison. La figure 1 illustre, de manière schématique et non limitative, un exemple d'un système d'amortissement selon l'invention. Le système d'amortissement 1 comprend deux réserves de liquide 2, reliées en leur base par un tube de liaison 3. Sur cette figure, les différents éléments sont représentés de manière sensiblement cylindrique, toutefois, ils peuvent avoir différentes formes.

Le système pouvant être soumis à des sollicitations est un support flottant soumis à des sollicitations causées par la houle. Selon l'invention, le système de stabilisation comporte au moins trois systèmes d'amortissement, chaque dispositif d'amortissement n'étant pas parallèle à au moins un autre dispositif d'amortissement du système de stabilisation, c'est-à-dire au moins deux dispositifs d'amortissement du système de stabilisation ne sont pas parallèles. En d'autres termes, l'ensemble des dispositifs d'amortissement ne sont pas tous parallèles (ce qui correspondrait en vue de dessus à un alignement des systèmes d'amortissement ou un parallélisme des tubes de liaison). Le parallélisme est considéré à partir des plans formés par les axes des réserves de liquide et par l'axe du tube de liaison pour chaque dispositif d'amortissement (plan du « tube en U »). Les tubes de liaison relient les réserves de liquide, permettant ainsi la circulation libre et dynamique du liquide entre les réserves de liquide dans au moins un des dispositifs d'amortissement en fonction de la direction de la houle.

Cette répartition non parallèle, et donc tridimensionnelle, permet d'amortir les mouvements du support flottant pour toutes les directions de la houle. Cette particularité permet d'optimiser l'amortissement multidirectionnel, grâce à un système dynamique permettant d'amortir les sollicitations dynamiques. De plus, cette caractéristique permet une adaptation aisée à la géométrie du support flottant. Le choix d'au moins trois systèmes d'amortissement permet de garantir un amortissement tridimensionnel, qui n'est pas obtenu avec un « tube en U » et qui est peu performant avec deux « tubes en U ».

Avantageusement, le liquide utilisé est de l'eau, par exemple de l'eau de mer. Toutefois, le liquide peut être de tout type, en particulier un liquide qui ne pollue pas ou peu l'eau du milieu ambiant en cas de fuite.

Les tubes de liaison peuvent être avantageusement situés dans la partie inférieure (au niveau de la base) des réserves de liquide, de manière à favoriser le déplacement du liquide entre les réserves de liquide d'un dispositif d'amortissement.

De plus, les tubes de liaison peuvent être sensiblement horizontaux, limitant ainsi le déplacement du liquide par gravité.

Dans la suite de la description et pour les revendications, les termes vagues, flots marins, et houle sont considérées comme équivalents.

Selon l'invention, l'agencement des dispositifs d'amortissement forme un polygone. Dans ce cas, des réserves de liquide forment les sommets du polygone, et les tubes de liaison forment les arrêtes du polygone. Le choix d'un polygone se fait notamment pour s'adapter à l'architecture du support flottant. Typiquement pour un support flottant du type semi-submersible, on peut faire en sorte que les réserves soient localisées au niveau des flotteurs de la structure semi-submersible, et que les tubes de liaison soient supportés par les bras reliant les flotteurs. Ces bras sont en polygone, on peut adapter le système de stabilisation en conséquence.

La conception « en polygone » permet une conception plus aisée en évitant les connexions entre tubes de liaison.

Lorsque les tubes de liaison forment un polygone, le polygone est de préférence un polygone régulier, permettant ainsi une répartition équilibrée du liquide, favorisant l'amortissement tridimensionnel du support flottant. Par exemple, le système de stabilisation peut comprendre trois dispositifs d'amortissement, agencés en triangle, de préférence selon un triangle équilatéral : aux sommets du triangle sont agencées deux réserves de liquide voisines entre elles et appartenant à deux dispositifs d'amortissement distincts. Selon un autre exemple, le système de stabilisation peut comporter quatre dispositifs d'amortissement formant un quadrilatère, de préférence un losange, et de manière très préférée un carré : aux sommets du quadrilatère sont agencées deux réserves de liquide voisines entre elles et appartenant à deux dispositifs d'amortissement distincts. Le polygone peut également être un pentagone, un hexagone, un octogone, etc.

L'agencement des dispositifs d'amortissement peut également combiner un polygone et une étoile. Dans ce cas, les sommets de l'étoile peuvent correspondre au sommet du polygone.

Conformément à une mise en oeuvre de l'invention, au moins un tube de liaison peut être en acier, en matériau composite, en matière plastique, en béton, ou tout matériau analogue.

Selon un mode de réalisation de l'invention, un tube de liaison d'au moins un dispositif d'amortissement, et de préférence tous les tubes de liaisons de tous les dispositifs d'amortissement, comporte des moyens de restriction de passage du liquide. Les moyens de restriction du passage du liquide permettent de ralentir le flux libre qui les traverse, de manière à optimiser l'amortissement apporté par le système stabilisateur. Ces moyens de restriction du passage du liquide peuvent être passifs ou actifs. Les moyens de restriction actifs permettent d'améliorer les performances d'amortissement.. Les moyens de restriction actifs n'ont pas pour but d'entraîner le déplacement du liquide, mais, au contraire, les moyens de restriction actifs ont uniquement pour but d'entraver/limiter partiellement la circulation libre du liquide. Les moyens de restriction peuvent être formés par exemple par une réduction du diamètre du tube localement, par une vanne, des pompes, ou des compresseurs, etc. Le réglage de cette restriction permet de régler certaines caractéristiques du système d'amortissement.

Les réserves de liquide peuvent être de différentes formes. Ainsi, elles peuvent être adaptées à différentes formes de support flottant. Selon une conception préférée de l'invention, les réserves de liquide ont sensiblement une forme cylindrique. On peut alors désigner les réserves de liquide par le terme colonne.

Conformément à une mise en œuvre de l'invention, au moins une réserve de liquide peut être en acier, en matériau composite, en matière plastique, en béton, ou tout matériau analogue.

Selon une mise en œuvre de l'invention, la partie inférieure des réserves de liquide comporte le liquide, et la partie supérieure comporte un gaz, notamment de l'air. Selon une première conception, les réserves de liquide peuvent échanger librement du gaz avec le milieu extérieur.

Pour cette mise en œuvre (avec un gaz dans la partie supérieure), le système de stabilisation peut comprendre des conduites de passage du gaz reliant les réserves de liquide d'un dispositif d'amortissement. Les réserves de liquide peuvent être alors isolées de l'air extérieur, de sorte qu'une surpression dans une réserve de liquide entraîne un flux de gaz vers l'autre réserve de liquide du dispositif d'amortissement, à travers la conduite de passage de gaz. Avantageusement, les conduites de passage de gaz sont situées dans la partie supérieure des réserves de liquide. Les conduites de passage de gaz peuvent être parallèles aux tubes de liaison. Le parallélisme permet de limiter l'encombrement du système de stabilisation.

Selon une caractéristique, une conduite de passage de gaz d'au moins un dispositif d'amortissement peut comprendre des moyens de restriction du passage du gaz. De préférence, toutes les conduites de passage du gaz peuvent comprendre des moyens de restriction du passage du gaz. Les moyens de restriction du passage du gaz permettent de limiter le flux de gaz d'une réserve de liquide à une autre. Ces moyens de restriction du passage du liquide peuvent être passifs ou actifs. Les moyens de restriction actifs n'ont pas pour but d'entraîner le déplacement du gaz, mais, au contraire, les moyens de restriction actifs ont uniquement pour but d'entraver/limiter partiellement la circulation libre du gaz. Les moyens de restriction actifs permettent d'améliorer les performances d'amortissement. Les moyens de restriction du passage du gaz peuvent être formés par exemple par une réduction du diamètre du tube localement, par une vanne, des pompes, ou des compresseurs. Le réglage de cette restriction permet de régler certaines caractéristiques liées à l'amortissement du système de stabilisation.

En outre, alternativement ou en complément des conduites de passage du gaz, au moins une réserve de liquide peut comporter une connexion avec le milieu extérieur, permettant le passage de l'air du milieu extérieur à la partie supérieure de la réserve de liquide et inversement. Ainsi, une surpression dans une réserve de liquide engendre un flux de gaz vers l'extérieur. Cette connexion peut être une restriction. Le réglage de cette surpression permet de régler certaines caractéristiques liées à l'amortissement du système de stabilisation.

Les dimensions des tubes de liaison et des réserves de liquide dépendent de la dimension du support flottant. On peut chercher à éloigner les réserves de liquide au maximum dans le support flottant, et les tubes de liaison sont adaptés en fonction. Par exemple pour une barge circulaire de diamètre 36m, et dans une configuration polygone triangle, on peut utiliser des tubes de liaison de 30m de long environ, de diamètre 1,5m, des réserves de liquide de 5 à 10m de haut et de diamètre 3m. Typiquement, on peut utiliser une masse totale de liquide (contenu dans les réserves de liquide et les tubes de liaison) de l'ordre de 5 à 15% de la masse du support flottant. Le concept fonctionne cependant à toutes les échelles.

Les figures 2a à 2e illustrent, en vue de dessus, et de manière non limitative, différents modes de réalisation du système de stabilisation selon l'invention. Sur ces figures, seuls les éléments principaux, ont été représentés. Néanmoins, ces modes de réalisation sont compatibles avec l'utilisation de conduites de passage du gaz, de moyens de restriction du passage du liquide, de moyens de restriction du passage du gaz, de connexions avec le milieu extérieur...

Le système de stabilisation, selon le mode de réalisation de la figure 2a, comporte trois dispositifs d'amortissement 1 agencés en triangle. Dans le cas illustré, il s'agit d'un triangle équilatéral. Chaque dispositif d'amortissement comporte deux réserves de liquide 2 et un tube de liaison 3. Les réserves de liquide 2 ont une forme sensiblement cylindrique. Chaque tube de liaison 3 relie deux réserves de liquide 2. Les tubes de liaison 3 sont situés dans la partie inférieure des réserves de liquide. A chaque sommet du triangle, sont agencées deux réserves de liquide 2 voisines entre elles et appartenant à de deux dispositifs d'amortissement distincts. Cette disposition est adaptée notamment à un support flottant du type tri-flotteurs, pour lequel chaque flotteur comporte un sommet du triangle, c'est-à-dire deux réserves de liquide 2 voisines entre elles et appartenant à deux dispositifs d'amortissement distincts. Les dispositifs d'amortissement sont agencés de manière à former un angle d'environ 60°, pour former le triangle équilatéral. Ainsi, deux dispositifs d'amortissement adjacents au niveau d'un angle du triangle ne sont pas parallèles l'un par rapport à l'autre. Cette variante de réalisation est également adaptée à un support flottant comprenant un unique flotteur, cet unique flotteur comprenant l'ensemble du système de stabilisation.

Le système de stabilisation, selon le mode de réalisation de la figure 2b, non conforme à l'invention, comporte trois dispositifs d'amortissement 1 agencés en étoile à trois branches. Chaque branche de l'étoile est formée par un dispositif d'amortissement 1 : le centre de l'étoile est formé par trois réserves de liquide à proximité les unes des autres, les réserves de liquide appartenant à des dispositifs d'amortissement distincts. Les dispositifs d'amortissement sont agencés de manière à former un angle d'environ 120°, pour former l'étoile. Ainsi, deux dispositifs adjacents au niveau du centre de l'étoile ne sont pas parallèles l'un par rapport à l'autre. Chaque dispositif d'amortissement 1 comporte deux réserves de liquide 2 et un tube de liaison 3. Les réserves de liquide 2 ont une forme sensiblement cylindrique. Chaque tube de liaison 3 relie deux réserves de liquide 2. Les tubes de liaison 3 sont situés dans la partie inférieure des réserves de liquide. Cette disposition est adaptée notamment à un support flottant du type tri-flotteurs, pour lequel chaque flotteur comporte un sommet de l'étoile. Cette variante de réalisation est également adaptée à un support flottant comprenant un unique flotteur, cet unique flotteur comprenant l'ensemble du système de stabilisation.

Le système de stabilisation, selon le mode de réalisation de la figure 2c, non conforme à l'invention, comporte trois dispositifs d'amortissement 1 agencés en étoile à six branches. Chaque dispositif d'amortissement 1 comporte deux réserves de liquide 2 et un tube de liaison 3. Les réserves de liquide 2 ont une forme sensiblement cylindrique. Chaque tube de liaison 3 relie deux réserves de liquide 2. Le centre de l'étoile est formé par le croisement des tubes de liaison 3. Au centre de l'étoile, les tubes de liaison ne sont pas connectés les uns avec les autres, mais peuvent être superposés les uns au-dessus des autres. Les dispositifs d'amortissement sont agencés de manière à former un angle d'environ 60°, pour former l'étoile. Ainsi, deux dispositifs d'amortissement adjacents au niveau du centre de l'étoile ne sont pas parallèles l'un par rapport à l'autre. Les tubes de liaison 3 sont situés dans la partie inférieure des réserves de liquide. Cette disposition est adaptée notamment à un support flottant du type hexa-flotteurs, pour lequel chaque flotteur comporte un sommet de l'étoile. Cette variante de réalisation est également adaptée à un support flottant comprenant un unique flotteur, cet unique flotteur comprenant l'ensemble du système de stabilisation.

Le système de stabilisation, selon le mode de réalisation de la figure 2d, comporte quatre dispositifs d'amortissement 1 agencés en quadrilatère. Dans le cas illustré, il s'agit d'un carré. Chaque dispositif d'amortissement comporte deux réserves de liquide 2 et un tube de liaison 3. Les réserves de liquide 2 ont une forme sensiblement cylindrique. Chaque tube de liaison 3 relie deux réserves de liquide 2. Les tubes de liaison 3 sont situés dans la partie inférieure des réserves de liquide. A chaque sommet du carré, sont agencées deux réserves de liquide 2 voisines entre elles et appartenant à deux dispositifs d'amortissement distincts. Les dispositifs d'amortissement sont agencés de manière à former un angle d'environ 90°, pour former le carré. Ainsi, deux dispositifs d'amortissement adjacents au niveau d'un angle du carré ne sont pas parallèles l'un par rapport à l'autre. Cette disposition est adaptée notamment à un support flottant du type quadri-flotteurs, pour lequel chaque flotteur comporte un sommet du carré, c'est-à-dire deux réserves de liquide 2 de deux dispositifs d'amortissement distincts. Cette variante de réalisation est également adaptée à un support flottant comprenant un unique flotteur, cet unique flotteur comprenant l'ensemble du système de stabilisation.

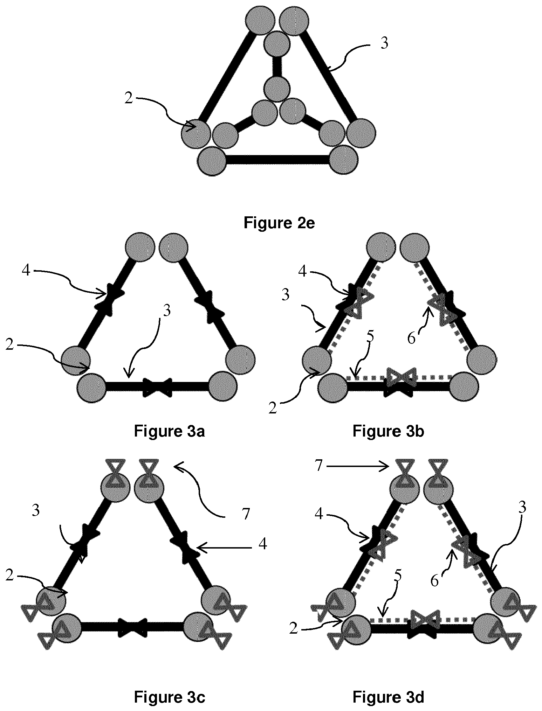

Le système de stabilisation, selon le mode de réalisation de la figure 2e, comporte six dispositifs d'amortissement 1, dont trois sont agencés en triangle et trois sont agencés en étoile. Dans le cas illustré, il s'agit d'un triangle équilatéral, dans lequel est inscrite l'étoile. Chaque branche de l'étoile est formée par un dispositif d'amortissement 1 : le centre de l'étoile est formé par trois réserves de liquide à proximité les unes des autres, les réserves de liquide appartenant à des dispositifs d'amortissement distincts et voisins. Les dispositifs d'amortissement de l'étoile sont agencés de manière à former un angle d'environ 120°, pour former l'étoile. Ainsi, deux dispositifs d'amortissement adjacents au niveau du centre de l'étoile ne sont pas parallèles l'un par rapport à l'autre. Les extrémités extérieures des branches de l'étoile sont voisines des sommets du triangle. A chaque sommet du triangle, sont agencées trois réserves de liquide 2 voisines entre elles et appartenant à trois dispositifs d'amortissement distincts. Les dispositifs d'amortissement du triangle sont agencés de manière à former un angle d'environ 60°, pour former le triangle équilatéral. Ainsi, deux dispositifs d'amortissement adjacents au niveau d'un angle du triangle ne sont pas parallèles l'un par rapport à l'autre. Chaque dispositif d'amortissement comporte deux réserves de liquide 2 et un tube de liaison 3. Les réserves de liquide 2 ont une forme sensiblement cylindrique. Chaque tube de liaison 3 relie deux réserves de liquide 2. Les tubes de liaison 3 sont situés dans la partie inférieure des réserves de liquide. Cette disposition est adaptée à un support flottant du type tri-flotteurs avec un flotteur central supplémentaire, pour lequel chaque flotteur comporte un sommet du triangle, c'est-à-dire trois réserves de liquide 2 de trois dispositifs d'amortissement distincts, et pour lequel le flotteur central comporte le centre de l'étoile, c'est-à-dire trois réserves de liquide 2 de trois dispositifs d'amortissement distincts. Cette variante de réalisation est également adaptée à un support flottant comprenant un unique flotteur, cet unique flotteur comprenant l'ensemble du système de stabilisation.

D'autres modes de réalisation peuvent être envisagés, notamment un agencement des dispositifs d'amortissement formant un carré et une étoile à quatre branches, ou un agencement formant un pentagone et une étoile à cinq branches...

Les figures 3a à 3d représentent, de manière schématique en vue de dessus, et de manière non limitative, quatre variantes du premier mode de réalisation correspondant à la figure 2a, c'est-à-dire avec trois dispositifs d'amortissement agencés en triangle.

Le système de stabilisation, selon la variante de réalisation de la figure 3a, comporte en plus des éléments illustrés sur la figure 2a, des moyens de restriction du liquide 4. Les moyens de restriction du liquide 4 sont placés sur chaque tube de liaison 3. Ils permettent de réduire le flux de liquide passant dans les tubes de liaison 3.

Le système de stabilisation, selon la variante de réalisation de la figure 3b, comporte en plus des éléments illustrés sur la figure 2a, des conduites de passage du gaz 5 (en traits pointillés) et des moyens de restriction du passage du gaz 6. Les conduites de passage du gaz 5 relient la partie supérieure des réserves de liquide 2 pour le passage de gaz d'une réserve de liquide à une autre. Pour cette variante, les conduites de passage du gaz 5 sont parallèles aux tubes de liaison 3. En outre, chaque conduite de passage du gaz 5 comporte des moyens de restriction du passage du gaz 6. Ils permettent de limiter le flux de gaz entre les réserves de liquide 2. Toutefois, ces moyens de restriction du passage du gaz 6 sont facultatifs.

Le système de stabilisation, selon la variante de réalisation de la figure 3c, comporte en plus des éléments illustrés sur la figure 2a, des moyens de restriction du liquide 4 et des connexions 7 avec le milieu extérieur. Les moyens de restriction du liquide 4 sont placés sur chaque tube de liaison 3. Ils permettent de réduire le flux de liquide passant dans les tubes de liaison 3. Les connexions 7, sous forme de restriction, permettent le passage du gaz du milieu extérieur dans la partie supérieure des réserves de liquide 2 et inversement. Cette variante peut comprendre en outre des conduites de passage du gaz (non représentées).

Le système de stabilisation, selon la variante de réalisation de la figure 3d, comporte en plus des éléments illustrés sur la figure 2a, des conduites de passage du gaz 5 (en traits pointillés), des moyens de restriction du passage du gaz 6, des moyens de restriction du liquide 4 et des connexions 7 avec le milieu extérieur. Les moyens de restriction du liquide 4 sont placés sur chaque tube de liaison 3. Ils permettent de réduire le flux de liquide passant dans les tubes de liaison 3. Les connexions 7, sous forme de restriction, permettent le passage du gaz du milieu extérieur dans la partie supérieure des réserves de liquide 2 et inversement. Les conduites de passage du gaz 5 relient la partie supérieure des réserves de liquide 2 pour le passage de gaz d'une réserve de liquide à une autre. Pour cette variante, les conduites de passage du gaz 5 sont parallèles aux tubes de liaison 3. En outre, chaque conduite de passage du gaz 5 comporte des moyens de restriction du passage du gaz 6. Ils permettent de limiter le flux de gaz entre les réserves de liquide 2. Toutefois, ces moyens de restriction du passage du gaz 6 sont facultatifs.

Ces variantes de réalisation peuvent être modifiées pour être adaptées aux différents concepts : notamment les agencements des figures 3b à 3d peuvent ne pas comprendre de moyens de restriction du passage du liquide...

En outre, ces différentes configurations peuvent être appliquées aux différents modes de réalisation, en particulier pour les modes de réalisation des figures 2b à 2e.

Le système de stabilisation permet d'amortir le mouvement multidirectionnel de la houle pour le support flottant.

Le support flottant peut avoir un unique flotteur ayant une forme sensiblement cylindrique, par exemple comme décrit dans la demande de brevet FR 2998338. Dans ce cas, le système de stabilisation peut être inclus dans l'unique flotteur.

Alternativement, le support flottant peut comprendre une pluralité, de préférence au moins trois, de flotteurs reliés entre eux. Il peut être notamment du type tri-flotteur, comme décrit dans la demande de brevet FR 2990005 (US 2015-0071779). Cette conception avec plusieurs flotteurs possède, en général, un faible déplacement, et présente une inertie de la surface de flottaison importante, leur procurant ainsi un couple de redressement suffisant à leur stabilité. De plus, ce type de flotteur est moins sensible à la houle que les barges. En cas de pluralité de flotteurs, chaque flotteur peut comprendre une ou plusieurs réserves de liquide du système de stabilisation, les tubes de liaison du système de stabilisation pouvant alors relier les différents flotteurs entre eux et peuvent être supportés par la structure du support flottant multi-flotteurs.

Ces supports flottants peuvent être ancrés au sol marin par des lignes d'ancrage tendues, semi-tendues ou des lignes d'ancrage caténaires.

La présente invention concerne également une installation d'éolienne sur une étendue d'eau (mer par exemple). L'installation comprend une éolienne à axe vertical ou à axe horizontal, et un support flottant selon l'une quelconque des combinaisons de variantes décrites précédemment. Le support flottant a pour but d'apporter la flottabilité et la stabilité de l'éolienne, de manière à reprendre les efforts exercés sur celle-ci, tout en limitant les mouvements de l'ensemble. Le support flottant selon l'invention est particulièrement adapté à l'installation d'une éolienne offshore (en mer), afin de permettre l'amortissement de la houle et la stabilité de l'éolienne.

Le support flottant selon l'invention peut être également utilisé dans d'autres domaines que l'installation d'éolienne offshore (en mer), par exemple pour des moyens de production d'hydrocarbures, des systèmes houlomoteurs (convertisseur de l'énergie de la houle en énergie mécanique ou électrique), ...

Exemple

Pour évaluer les performances d'un support flottant (flotteur) muni d'un système de stabilisation selon l'invention, on peut décrire d'une part les interactions entre celui-ci et le flotteur et, d'autre part, les interactions entre le flotteur et la houle. On utilise une approche Lagrangienne pour obtenir les équations du mouvement, dont la forme générale est donnée par

$$\frac{d}{dt}\frac{\partial L}{\partial \dot{q}_k} - \frac{\partial L}{\partial q_k} = Q_k$$

où L est le Langrangien du système constitué du flotteur et du système de stabilisation, $q_k$ les paramètres du système et $Q_k$ les forces généralisées.

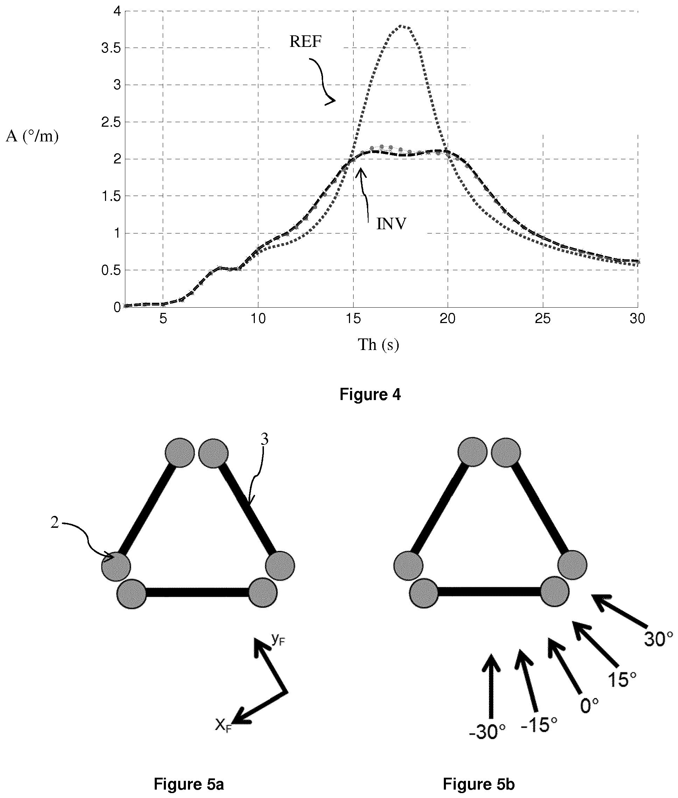

Par cet exemple, on montre le caractère multidirectionnel du système de stabilisation selon l'invention. Pour cela, on évalue la réponse d'un flotteur muni d'un système de stabilisation selon l'invention comme illustré dans la figure 1, pour différents angles d'incidence de la houle. On associe un repère local à chaque angle d'incidence, comme défini dans la figure 5a. Quel que soit l'angle d'incidence, les mouvements du flotteur sont évalués dans le repère local de la houle incidente (donc de l'excitation), notamment en terme d'amplitude de mouvement angulaire selon la direction perpendiculaire à la vague incidente (selon $x_F$).

Les résultats sont donnés en figure 4 en utilisant la barge MIT comme flotteur (tel que décrit dans le document : J. M. Jonkman, Dynamics modeling and loads analysis of an offshore floating wind turbine, PhD Thesis NREL/TP-500-41958, National Renewable Energy Laboratory, Nov 2007). La figure 4 comprend des courbes du ratio A (°/m) de l'amplitude angulaire par rapport à la hauteur de la houle en fonction de la période de la houle Th (s). Ce flotteur étant circulaire, par symétrie, sa réponse sans dispositif d'amortissement, c'est-à-dire selon l'art antérieur, est identique quel que soit l'angle d'incidence. Cette réponse est donnée par la courbe REF. Pour évaluer la sensibilité de la réponse du flotteur muni du système de stabilisation selon l'invention, à l'angle d'incidence de la houle, on a fait varier cet angle par intervalle de 15° entre -30° et +30° (cf. figure 5b). Le support selon l'invention « en triangle équilatéral » étant lui-même invariant par rotation de 120° et symétrique, ce balayage de 60° est équivalent à un balayage de 360° de l'angle de d'incidence. Les courbes (une pour chaque angle d'incidence de la houle) obtenues pour le système selon l'invention sont notées INV. Ces courbes sont quasiment confondues. Par rapport à la référence REF selon l'art antérieur, l'utilisation du système de stabilisation selon l'invention INV permet une réduction très significative (environ 40 %) de l'amplitude du mouvement sur une large gamme de périodes d'excitation, tout comme c'est le cas pour une barge munie d'un simple « tube en U » disposé dans le plan d'incidence de la houle. De plus, par la superposition des courbes, on constate une sensibilité extrêmement faible à l'angle d'incidence. On peut donc dire que le système de stabilisation selon l'invention a un caractère multidirectionnel pour l'amortissement. A contrario, un système à « tube en U » simple ne permet aucun amortissement pour une houle dont l'angle d'incidence est perpendiculaire à l'axe du « tube en U ».

## Revendications

1. Support flottant comprenant au moins un flotteur et un système de stabilisation comportant une pluralité de dispositifs d'amortissement (1), chaque dispositif d'amortissement (1) ayant sensiblement une forme de U et comportant deux réserves de liquide (2) et un tube de liaison (3) reliant lesdites deux réserves de liquide (2), ledit système de stabilisation comportant au moins trois dispositifs d'amortissement (1), chaque dispositif d'amortissement (1) n'étant pas parallèle à au moins un autre dispositif d'amortissement (1) et dans lequel lesdits dispositifs d'amortissement (1) sont agencés de sorte à former un polygone, de préférence un polygone régulier, les sommets dudit polygone étant formés par lesdites réserves de liquide (2) desdits dispositifs d'amortissement, et les arrêtes dudit polygone étant formées par lesdits tubes de liaison (3) desdits dispositifs d'amortissement (1) **caractérisé en ce que** dans lequel lesdits sommets dudit polygone sont formés par au moins deux réserves de liquide (2) de deux dispositifs d'amortissement distincts

2. Support flottant selon la revendication 1, dans lequel un tube de liaison (3) d'au moins un dispositif d'amortissement (1) comporte des moyens de restriction du passage (4) dudit liquide.

3. Support flottant selon l'une des revendications précédentes, dans lequel lesdites réserves de liquide (2) d'au moins un dispositif d'amortissement (1) comportent un gaz dans leurs parties supérieures.

4. Support flottant selon la revendication 3, dans lequel au moins un dispositif d'amortissement (1) comporte une conduite (5) pour le passage dudit gaz reliant lesdites deux réserves de liquide (2).

5. Support flottant selon l'une des revendications 3 ou 4, dans lequel ladite conduite (5) pour le passage dudit gaz est parallèle audit tube de liaison (3).

6. Support flottant selon l'une des revendications 3 à 5, dans lequel ladite conduite (5) pour le passage dudit gaz comporte des moyens de restriction (6) du passage dudit gaz.

7. Support flottant selon l'une des revendications 3 à 6, dans lequel au moins une réserve de liquide (2) comporte une connexion (7) avec un gaz du milieu extérieur.

8. Support flottant selon l'une des revendications précédentes, dans lequel lesdites réserves de liquide (2) ont une forme sensiblement cylindrique.

9. Support flottant selon l'une des revendications précédentes, comportant entre trois et huit dispositifs d'amortissement.

10. Système de production d'énergie en mer comprenant au moins une éolienne, au moins un flotteur et un support flottant selon l'une des revendications précédentes.

## Patentansprüche

1. Schwimmender Träger, umfassend mindestens einen Schwimmer und ein Stabilisierungssystem mit mehreren Dämpfungsvorrichtungen (1), wobei jede Dämpfungsvorrichtung (1) im Wesentlichen U-förmig ist und zwei Flüssigkeitsvorräte (2) und ein die beiden Flüssigkeitsvorräte (2) verbindendes Verbindungsrohr (3) aufweist,

wobei das Stabilisierungssystem mindestens drei Dämpfungsvorrichtungen (1) aufweist, wobei jede Dämpfungsvorrichtung (1) nicht parallel zu mindestens einer anderen Dämpfungsvorrichtung (1) ist und wobei die Dämpfungsvorrichtungen (1) so angeordnet sind, dass sie ein Polygon, vorzugsweise ein regelmäßiges Polygon, bilden, wobei die Spitzen des Polygons durch die Flüssigkeitsvorräte (2) der Dämpfungsvorrichtungen gebildet sind und wobei die Kanten des Polygons durch die Verbindungsrohre (3) der Dämpfungsvorrichtungen (1) gebildet sind,

**dadurch gekennzeichnet, dass** die Spitzen des Polygons durch mindestens zwei Flüssigkeitsvorräte (2) zweier verschiedener Dämpfungsvorrichtungen gebildet sind.

2. Schwimmender Träger nach Anspruch 1, wobei ein Verbindungsrohr (3) mindestens einer Dämpfungsvorrichtung (1) Mittel zur Beschränkung des Durchgangs (4) der Flüssigkeit aufweist.

3. Schwimmender Träger nach einem der vorangehenden Ansprüche, wobei die Flüssigkeitsvorräte (2) mindestens einer Dämpfungsvorrichtung (1) in ihren oberen Bereichen ein Gas aufweisen.

4. Schwimmender Träger nach Anspruch 3, wobei mindestens eine Dämpfungsvorrichtung (1) eine Leitung (5) für den Durchgang des Gases aufweist, die die beiden Flüssigkeitsvorräte (2) verbindet.

5. Schwimmender Träger nach einem der Ansprüche 3 oder 4, wobei die Leitung (5) für den Durchgang des Gases parallel zum Verbindungsrohr (3) verläuft.

6. Schwimmender Träger nach einem der Ansprüche 3 bis 5, wobei die Leitung (5) für den Durchgang des Gases Mittel (6) zur Beschränkung des Durchgangs des Gases aufweist.

7. Schwimmender Träger nach einem der Ansprüche 3 bis 6, wobei mindestens ein Flüssigkeitsvorrat (2) eine Verbindung (7) zu einem Gas der äußeren Umgebung aufweist.

8. Schwimmender Träger nach einem der vorangehenden Ansprüche, wobei die Flüssigkeitsvorräte (2) im Wesentlichen zylinderförmig sind.

9. Schwimmender Träger nach einem der vorangehenden Ansprüche, umfassend zwischen drei und acht Dämpfungsvorrichtungen.

10. Offshore-Energieerzeugungssystem, umfassend mindestens eine Windkraftanlage, mindestens einen Schwimmer und einen schwimmenden Träger nach einem der vorangehenden Ansprüche.

**Claims**

1. Floating support comprising at least one float and a stabilizing system having a plurality of damping devices (1), each damping device (1) being substantially U-shaped and having two liquid reserves (2) and a connection tube (3) connecting said two liquid reserves (2), said stabilizing system having at least three damping devices (1), each damping device (1) not being parallel to at least one other damping device (1) and wherein said damping devices (1) are arranged so as to form a polygon, preferably a regular polygon, the vertices of said polygon being formed by said liquid reserves (2) of said damping devices, and the edges of said polygon being formed by said connection tubes (3) of said damping devices (1) **characterized in that** wherein said vertices of said polygon are formed by at least two liquid reserves (2) of two separate damping devices.

2. Floating support according to Claim 1, wherein a connection tube (3) of at least one damping device (1) has means (4) for restricting the passage of said liquid.

3. Floating support according to either of the preceding claims, wherein said liquid reserves (2) of at least one damping device (1) have a gas in their upper parts.

4. Floating support according to Claim 3, wherein at least one damping device (1) has a pipe (5) for the passage of said gas connecting said two liquid reserves (2) .

5. Floating support according to either of Claims 3 and 4, wherein said pipe (5) for the passage of said gas is parallel to said connection tube (3).

6. Floating support according to one of Claims 3 to 5, wherein said pipe (5) for the passage of said gas has means (6) for restricting the passage of said gas.

7. Floating support according to one of Claims 3 to 6, wherein at least one liquid reserve (2) has a connection (7) with a gas from the external environment.

8. Floating support according to one of the preceding claims, wherein said liquid reserves (2) have a substantially cylindrical shape.

9. Floating support according to one of the preceding claims, having between three and eight damping devices.

10. Offshore energy production system comprising at least one wind turbine, at least one float and a floating support according to one of the preceding claims.

Figure 1

Figure 2a

Figure 2b

Figure 2c

Figure 2d

Figure 2e

Figure 3a

Figure 3b

Figure 3c

Figure 3d

A (°/m)

REF

INV

Th (s)

Figure 4

3

2

$y_F$

$x_F$

Figure 5a

30°

15°

0°

-15°

-30°

Figure 5b

## RÉFÉRENCES CITÉES DANS LA DESCRIPTION

**Documents brevets cités dans la description**

- WO 2006062390 A1
- US 2014339828 A1
- NL 280007
- FR 2998338
- FR 2990005
- US 20150071779 A

**Littérature non-brevet citée dans la description**

- **C. COUDURIER ; O. LEPREUX ; N. PETIT.** Passive and semi-active control of an offshore floating wind turbine using a tuned liquid column damper. *Proc. of 10th IFAC Conférence on Manoeuvring and Control of Marine Craft, MCMC,* 2015
- Dynamics modeling and loads analysis of an offshore floating wind turbine. **J. M. JONKMAN.** PhD Thesis NREL/TP-500-41958. National Renewable Energy Laboratory, Novembre 2007